# EUROPEAN PATENT APPLICATION

(11) **EP 4 790 317 A1**
(43) Date of publication of application: **12.08.2026**
(21) Application number: 26151980.5
(22) Date of filing: 15.01.2026
(51) Int. Cl.: F23R 3/00, F23R 3/50, F23R 3/10

(54) **HEAT SHIELD FOR A FUEL NOZZLE OF A TURBINE ENGINE**

(30) Priority: 07.02.2025 US 202519048679
(71) Applicant: General Electric Company, Cincinnati, Ohio 45215 (US)
(72) Inventor: NATH, Hiranya, 560066 Bengaluru (IN); BIRMAHER, Shai, 45241 Evendale (US); LI, Hejie, 45241 Evendale (US)
(74) Representative: Openshaw & Co.

(57) **Abstract**

A heat shield (210, 310, 410, 510) for a fuel nozzle includes an aft wall (220, 320, 420, 520), a forward wall (222, 322, 422, 522) disposed between the aft wall (220, 320, 420, 520) and a cooling flow passage (224) partially defined by the forward wall (222, 322, 422, 522), an outer wall (230, 330, 430, 530) extending between the aft wall (220, 320, 420, 520) and the forward wall (222, 322, 422, 522), an inner wall (226, 326, 426, 526) extending between the aft wall (220, 320, 420, 520) and the forward wall (222, 322, 422, 522), and an internal cooling cavity (234, 334, 434, 534) defined and enclosed by the aft wall (220, 320, 420, 520), the forward wall (222, 322, 422, 522), the outer wall (230, 330, 430, 530), and the inner wall (226, 326, 426, 526). A plurality of first exhaust apertures (236, 336, 436, 536) opens into the cooling flow passage (224) and extends through the forward wall (222, 322, 422, 522) into the internal cooling cavity (234, 334, 434, 534), a plurality of second exhaust apertures (238, 338, 438, 538) opens into the internal cooling cavity (234, 334, 434, 534) and extends through the aft wall (220, 320, 420, 520), and a plurality of third exhaust apertures (240, 340, 440, 540) opens into the cooling flow passage (224) and extends through the forward wall (222, 322, 422, 522) to an outer surface (223, 233, 323, 333, 423, 433, 523, 533) of the outer wall (230, 330, 430, 530).

## Description

### TECHNICAL FIELD

The present disclosure relates generally to a fuel nozzle for a turbine engine. More particularly, the disclosure relates to heat shields for fuel nozzles of turbine engines.

### BACKGROUND

Turbine engines generally include a fan and a core section arranged in flow communication with one another. A combustor with a plurality of fuel nozzles is arranged in the core section to generate combustion gases for driving a turbine of the turbine engine. In operation, the fuel nozzles are exposed to relatively high temperatures within the combustor.

### BRIEF DESCRIPTION OF THE DRAWINGS

Features and advantages of the present disclosure will be apparent from the following description of various exemplary embodiments, as illustrated in the accompanying drawings, wherein like reference numbers generally indicate identical, functionally similar, and/or structurally similar elements.
FIG. 1 is a schematic, cross-sectional diagram of a turbine engine, taken along a longitudinal centerline axis of the turbine engine, according to the present disclosure.
FIG. 2 is a schematic, cross-sectional diagram of a combustor of the turbine engine of FIG. 1, taken along a centerline axis of the turbine engine, according to the present disclosure.
FIG. 3 is a partial, schematic, cross-sectional, side view of an exemplary fuel nozzle assembly of the combustor of FIG. 2, taken along a centerline axis of the fuel nozzle assembly, according to the present disclosure.
FIGS. 4 and 5 are partial, cross-sectional, elevational views of an exemplary heat shield of the fuel nozzle assembly of FIG. 3, taken along a centerline axis of the heat shield, according to the present disclosure.
FIG. 6 is a detail, forward-looking perspective view of the heat shield of FIGS. 3 to 5.
FIG. 7 is a cross-sectional view taken along line 7-7 in FIG. 6, with a plurality of first cooling exhaust apertures removed.
FIG. 8 is a partial, detail view taken along the area labeled "8" in FIG. 7, illustrating a portion of the plurality of first cooling exhaust apertures of the heat shield of FIGS. 3 to 6.
FIG. 9 is a forward-looking elevational view of the heat shield of FIGS. 3 to 6, with a plurality of second cooling exhaust apertures, a plurality of third cooling exhaust apertures, and a plurality of fourth cooling exhaust apertures removed.
FIG. 10 is a partial, detail view taken along the area labeled "10" in FIG. 9, illustrating a portion of the plurality of second cooling exhaust apertures of the heat shield of FIGS. 3 to 6.
FIG. 11 is a partial, schematic representation of another exemplary heat shield of a fuel nozzle assembly, such as the fuel nozzle assembly of FIGS. 3 to 10, according to the present disclosure.
FIG. 12 is a partial, schematic representation of yet another exemplary heat shield of a fuel nozzle assembly, such as the fuel nozzle assembly of FIGS. 3 to 10, according to the present disclosure.
FIG. 13 is a partial, schematic representation of still another exemplary heat shield of a fuel nozzle assembly, such as the fuel nozzle assembly of FIGS. 3 to 10, according to the present disclosure.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments of the present disclosure are discussed in detail below. While specific embodiments are discussed, this is done for illustration purposes only. A person skilled in the relevant art will recognize that other components and configurations may be used without departing from the present disclosure.

As used herein, the terms "first," "second," "third," "fourth," "fifth," etc., may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "forward" and "aft" refer to relative positions within a turbine engine or vehicle and are based on a normal operational attitude of the turbine engine or vehicle. More particularly, forward and aft are used herein with reference to a direction of travel of the vehicle and a direction of propulsive thrust of the turbine engine. For example, with regard to a turbine engine, forward refers to a position closer to an engine inlet and aft refers to a position closer to an engine nozzle or an exhaust.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein.

The singular forms "a," "an," and "the" include plural references unless the context clearly dictates otherwise.

As used herein, the terms "axial" and "axially" refer to directions and orientations that extend substantially parallel (e.g., parallel to within five degrees) to a longitudinal centerline axis of the turbine engine. Moreover, the terms "radial" and "radially" refer to directions and orientations that extend substantially perpendicular (e.g., perpendicular to within five degrees) to the longitudinal centerline axis of the turbine engine. In addition, as used herein, the terms "circumferential" and "circumferentially" refer to directions and orientations that extend arcuately about the longitudinal centerline axis of the turbine engine.

Approximating language, as used herein throughout the specification and claims, is applied to modify any quantitative representation that could permissibly vary without resulting in a change in the basic function to which it is related. Accordingly, a value modified by a term or terms, such as "about" and "substantially" is not to be limited to the precise value specified. In at least some instances, the approximating language may correspond to the precision of an instrument for measuring the value, or the precision of the methods, or the machines for constructing the components, and/or the systems or manufacturing the components and/or the systems. For example, the approximating language may refer to being within a one, two, four, ten, fifteen, or twenty percent margin in either individual values, range(s) of values and/or endpoints defining range(s) of values.

Here and throughout the specification and claims, range limitations are combined, and interchanged. Such ranges are identified and include all the sub-ranges contained therein unless context or language indicates otherwise. For example, all ranges disclosed herein are inclusive of the endpoints, and the endpoints are independently combinable with each other.

Combustors for turbine engines, such as turbine engines for aircraft, ignite fuel and air mixtures to produce combustion gases, which in turn drive one or more turbines of the turbine engine, thereby rotating one or more loads (e.g., a fan, a propeller, etc.). Air pollution concerns have led to stricter combustion emissions standards. Such standards regulate the emission of nitrogen oxide (NOₓ), non-volatile particulate matter (nvPM), as well as other types of exhaust emissions, from the turbine engine. The nvPM includes, for example, soot, smoke, or the like. Generally, NOₓ is formed during the combustion process due to high flame temperatures in the combustor. Turbine engine design tradeoffs are necessary to meet requirements for noise, emissions, fuel burn, cost, weight, and performance. Combustion emissions may be a function of an amount of cooling air mixed with the combustion products. For example, combustors, and fuel nozzles thereof, for turbine engines are exposed to high gas temperatures from combustion products, resulting in decreased durability of the fuel nozzle over the lifecycle of the turbine engine.

To withstand such gas temperatures during continued operation of the turbine engine, conventional fuel nozzles commonly include a heat shield at an aft end of the fuel nozzle adjacent to a combustion chamber of the combustor. However, heat shields of such conventional fuel nozzles typically fail to have adequate cooling from compressed air as the compressed air enters the combustion chamber, which results in flame instability and combustion inefficiency of the combustor, as well as decreased durability of the heat shield itself. Further, a degraded heat shield of conventional fuel nozzles commonly requires replacement of the entire fuel nozzle, which can result in increased maintenance costs and significant downtime of an aircraft having the turbine engine.

Accordingly, the present disclosure provides for an improved heat shield of a fuel nozzle for a turbine engine that maximizes cooling of the heat shield from compressed air as the compressed air flows through the fuel nozzle and enters the combustion chamber. Particularly, embodiments of the present disclosure can provide a heat shield with a closed internal cooling cavity that exerts a double pressure-drop to the compressed air flowing through the fuel nozzle, which can provide for improved flame stability and combustion efficiency of the combustor, as well as improved durability of the heat shield itself.

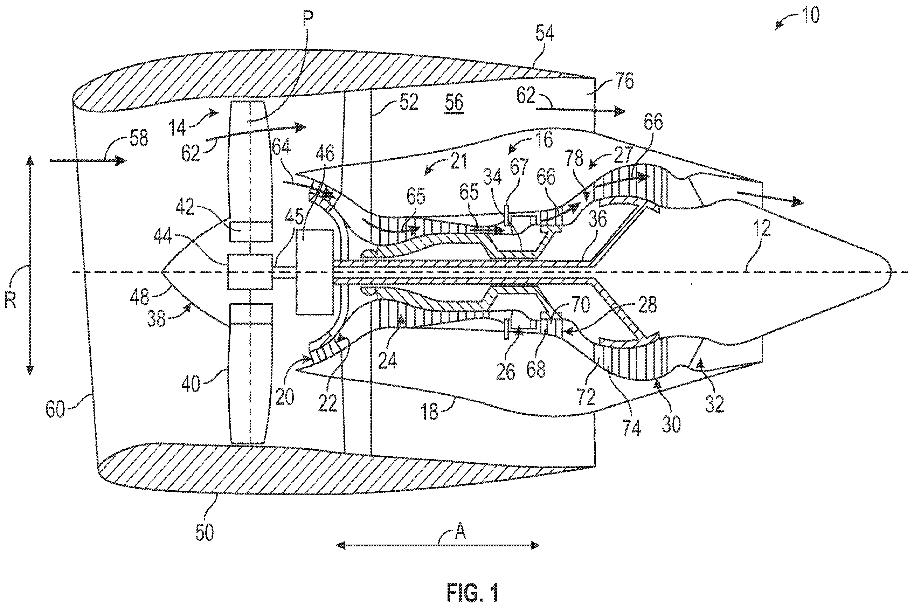

Referring now to the drawings, FIG. 1 is a schematic, cross-sectional diagram of a turbine engine 10, taken along a longitudinal centerline axis 12 of the turbine engine 10, according to an embodiment of the present disclosure. As shown in FIG. 1, the turbine engine 10 defines an axial direction A (extending parallel to the longitudinal centerline axis 12 provided for reference) and a radial direction R that is normal to the axial direction A. In general, the turbine engine 10 includes a fan section 14 and a turbo-engine 16 disposed downstream from the fan section 14.

The turbo-engine 16 includes, in serial flow relationship, a compressor section 21, a combustion section 26, and a turbine section 27. The turbo-engine 16 is substantially enclosed within an outer casing 18 that is substantially tubular and defines a core inlet 20 that is annular about the longitudinal centerline axis 12. As schematically shown in FIG. 1, the compressor section 21 includes a booster or a low pressure (LP) compressor 22 followed downstream by a high pressure (HP) compressor 24. The combustion section 26 is downstream of the compressor section 21. The turbine section 27 is downstream of the combustion section 26 and includes a high pressure (HP) turbine 28 followed downstream by a low pressure (LP) turbine 30. The turbo-engine 16 further includes a jet exhaust nozzle section 32 that is downstream of the turbine section 27, a high-pressure (HP) shaft 34 or a spool, and a low-pressure (LP) shaft 36. The HP shaft 34 drivingly connects the HP turbine 28 to the HP compressor 24. The HP turbine 28 and the HP compressor 24 rotate in unison through the HP shaft 34. The LP shaft 36 drivingly connects the LP turbine 30 to the LP compressor 22. The LP turbine 30 and the LP compressor 22 rotate in unison through the LP shaft 36. The compressor section 21, the combustion section 26, the turbine section 27, and the jet exhaust nozzle section 32 together define a core air flow path.

For the embodiment depicted in FIG. 1, the fan section 14 includes a fan 38 (e.g., a variable pitch fan) having a plurality of fan blades 40 coupled to a disk 42 in a spaced apart manner. As depicted in FIG. 1, the fan blades 40 extend outwardly from the disk 42 generally along the radial direction R. In the case of a variable pitch fan, the plurality of fan blades 40 is rotatable relative to the disk 42 about a pitch axis P by virtue of the fan blades 40 being operatively coupled to an actuation member 44 configured to collectively vary the pitch of the fan blades 40 in unison. The fan blades 40, the disk 42, and the actuation member 44 are together rotatable about the longitudinal centerline axis 12 via a fan shaft 45 that is powered by the LP shaft 36 across a power gearbox, also referred to as a gearbox assembly 46. In this way, the fan 38 is drivingly coupled to, and powered by, the turbo-engine 16, and the turbine engine 10 is an indirect drive engine. The gearbox assembly 46 is shown schematically in FIG. 1. The gearbox assembly 46 is a reduction gearbox assembly for adjusting the rotational speed of the fan shaft 45 and, thus, the fan 38 relative to the LP shaft 36 when power is transferred from the LP shaft 36 to the fan shaft 45.

Referring still to the exemplary embodiment of FIG. 1, the disk 42 is covered by a fan hub 48 that is aerodynamically contoured to promote an airflow through the plurality of the fan blades 40. In addition, the fan section 14 includes an annular fan casing or a nacelle 50 that circumferentially surrounds the fan 38 and at least a portion of the turbo-engine 16. The nacelle 50 is supported relative to the turbo-engine 16 by a plurality of outlet guide vanes 52 that are circumferentially spaced about the nacelle 50 and the turbo-engine 16. Moreover, a downstream section 54 of the nacelle 50 extends over an outer portion of the turbo-engine 16, and, with the outer casing 18, defines a bypass airflow passage 56 therebetween.

During operation of the turbine engine 10, a volume of air 58 enters the turbine engine 10 through an inlet 60 of the nacelle 50 or the fan section 14. As the volume of air 58 passes across the fan blades 40, a first portion of air, also referred to as bypass air 62, is routed into the bypass airflow passage 56, and a second portion of air, also referred to as core air 64, is routed into the upstream section of the core air flow path through the core inlet 20 of the LP compressor 22. The ratio between the bypass air 62 and the core air 64 is commonly known as a bypass ratio. The pressure of the core air 64 is then increased, generating compressed air 65. The compressed air 65 is routed through the HP compressor 24 and into the combustion section 26, where the compressed air 65 is mixed with fuel 67 and ignited to generate combustion gases 66.

The combustion gases 66 are routed into the HP turbine 28 and expanded through the HP turbine 28 where a portion of thermal energy or kinetic energy from the combustion gases 66 is extracted via one or more stages of HP turbine stator vanes 68 and HP turbine rotor blades 70 that are coupled to the HP shaft 34. This causes the HP shaft 34 to rotate, thereby supporting operation of the HP compressor 24 (e.g., a self-sustaining cycle). In this way, the combustion gases 66 do work on the HP turbine 28. The combustion gases 66 are then routed into the LP turbine 30 and expanded through the LP turbine 30. Here, a second portion of the thermal energy or the kinetic energy is extracted from the combustion gases 66 via one or more stages of LP turbine stator vanes 72 and LP turbine rotor blades 74 that are coupled to the LP shaft 36. This causes the LP shaft 36 to rotate, thereby supporting operation of the LP compressor 22 (e.g., a self-sustaining cycle) and rotation of the fan 38 via the gearbox assembly 46. In this way, the combustion gases 66 do work on the LP turbine 30.

The combustion gases 66 are subsequently routed through the jet exhaust nozzle section 32 of the turbo-engine 16 to provide propulsive thrust. Simultaneously, the bypass air 62 is routed through the bypass airflow passage 56 before being exhausted from a fan nozzle exhaust section 76 of the turbine engine 10, also providing propulsive thrust. The HP turbine 28, the LP turbine 30, and the jet exhaust nozzle section 32 at least partially define a hot gas path 78 for routing the combustion gases 66 through the turbo-engine 16.

The turbine engine 10 depicted in FIG. 1 is by way of example only. In other exemplary embodiments, the turbine engine 10 may have any other suitable configuration. For example, in other exemplary embodiments, the fan 38 may be configured in any other suitable manner (e.g., as a fixed pitch fan) and further may be supported using any other suitable fan frame configuration. Moreover, in other exemplary embodiments, any other suitable number or configuration of compressors, turbines, shafts, or a combination thereof may be provided. In still other exemplary embodiments, aspects of the present disclosure may be incorporated into any other suitable turbine engine, such as, for example, turbofan engines, propfan engines, turbojet engines, turboprop engines, or turboshaft engines.

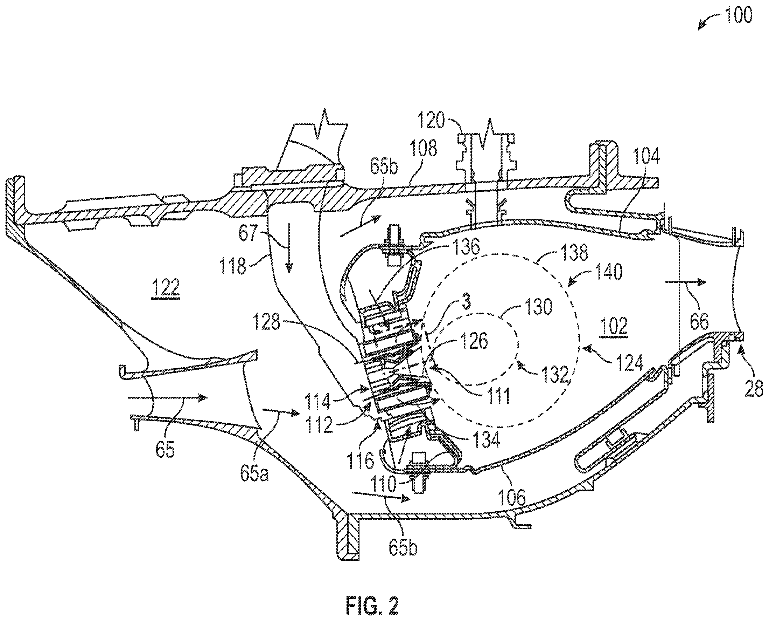

FIG. 2 is a schematic cross-sectional diagram of a combustor 100 that can be used with the turbine engine 10 (FIG. 1), taken along the longitudinal centerline axis 12 of the turbine engine 10 (FIG. 1). In the exemplary embodiment, the combustion section 26 (FIG. 1) includes the combustor 100 having a combustion chamber 102 defined by an outer liner 104 and an inner liner 106. The outer liner 104 and the inner liner 106 are annular about the longitudinal centerline axis 12 of the turbine engine 10 (FIG. 1). The outer liner 104 defines a radially outer boundary of the combustion chamber 102, and the inner liner 106 defines a radially inner boundary of the combustion chamber 102. The outer liner 104 and the inner liner 106 are spaced radially inward from an annular combustor casing 108 that extends circumferentially about the outer liner 104 and the inner liner 106. The combustor 100 also includes an annular dome 110 mounted upstream from the outer liner 104 and the inner liner 106. The annular dome 110 defines an upstream end of the combustion chamber 102.

The combustor 100 further includes a plurality of fuel nozzle assemblies 111. In the illustrated embodiment, the plurality of fuel nozzle assemblies 111 includes a plurality of mixer assemblies 112 (only one is illustrated in FIG. 2) that are spaced circumferentially about the annular dome 110 to deliver a mixture of fuel and air to the combustion chamber 102. In FIG. 2, each mixer assembly 112 is a twin annular premixing swirler (TAPS) that includes a pilot mixer 114 and a main mixer 116. The main mixer 116 is concentrically aligned with respect to the pilot mixer 114 and extends circumferentially about the pilot mixer 114. A plurality of circumferentially spaced and axially extending fuel injectors 118 (only one is illustrated in FIG. 2) is coupled in flow communication with each respective mixer assembly 112. Downstream of the mixer assembly 112 is an igniter 120 that extends through the annular combustor casing 108 and into the combustion chamber 102 to provide initial ignition of the mixture of the compressed air 65 and the fuel 67. In various embodiments, the igniter 120 can provide continuous or intermittent ignition support to the combustion chamber 102.

In operation, the combustor 100 receives the compressed air 65 discharged from the HP compressor 24 (FIG. 1) in a diffuser section 122 at a location upstream of the combustion chamber 102. A portion of the compressed air 65, as indicated schematically by arrow 65a in FIG. 2, is channeled through the mixer assembly 112. At the mixer assembly 112, the portion of compressed air 65a is mixed with the fuel 67 from the fuel injector 118 and discharged into the combustion chamber 102. The mixture of the portion of compressed air 65a and the fuel 67 is ignited by igniter 120, creating a flame 124 within the combustion chamber 102 that burns the mixture and provides the combustion gases 66 that are channeled downstream to a first stage turbine nozzle of the HP turbine 28 (FIG. 1). Typically, the HP compressor 24 provides more compressed air 65 to the combustion section 26 than is needed for combustion. Therefore, a second portion of the compressed air 65, as indicated schematically by arrows 65b in FIG. 2, may be used for various purposes other than combustion.

In the illustrated embodiment, the combustor 100 is a lean burn combustor. Specifically, at engine start conditions and at engine low power operation (e.g., less than 30% of SLS maximum engine rated thrust) of the turbine engine 10 (FIG. 1), such as at idle, at taxi, or at descent, the combustor 100 uses only the fuel 67 provided to the pilot mixer 114 for generating the combustion gases 66. At the pilot mixer 114, the fuel 67 includes a pilot fuel stream 126 that is mixed with the first portion of compressed air 65a to provide a pilot air-fuel mixture 128 that is rich (e.g., higher fuel-to-air ratios within the mixture) that is ignited for a pilot flame 130 within a region 132 that is adjacent to the pilot mixer 114. At high power operation (e.g., greater than 85% of SLS maximum engine rated thrust) of the turbine engine 10, such as at takeoff or at climb, and at mid-level power operation (e.g., 30% to 85% of SLS maximum engine rated thrust) of the turbine engine 10, such as at cruise, the combustor 100 uses the fuel 67 split between the pilot mixer 114 and the main mixer 116 for generating the combustion gases 66. At the main mixer 116, the fuel 67 includes a main fuel stream 134 that is mixed with a second portion 136 of the compressed air 65 to provide a lean fuel-air mixture (e.g., lower fuel to air ratios within the mixture) that is ignited for a main flame 138 within a region 140 that is adjacent to the main mixer 116, thus, providing a lean burn combustion process to generate the combustion gases 66 while reducing NOₓ emissions by operating fuel lean, as detailed further below. Further, the lean burn combustion process provides for low non-volatile particulate matter (nvPM), such as soot or smoke, and reduces NOₓ emissions.

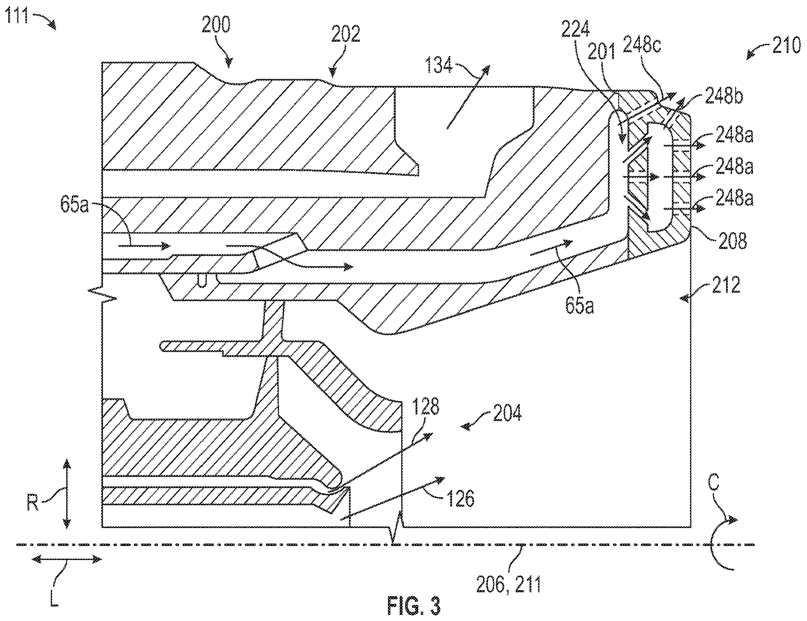

FIG. 3 is a partial, cross-sectional, side view of an exemplary fuel nozzle assembly of the plurality of fuel nozzle assemblies 111 of FIG. 2, according to an embodiment of the present disclosure. The fuel nozzle assembly 111 includes a fuel nozzle housing 200, which contains, among other elements, a main fuel injection portion 202 and a pilot fuel nozzle 204. The pilot fuel nozzle 204 and the fuel nozzle housing 200 are generally defined circumferentially about a fuel nozzle centerline axis 206 extending in a longitudinal direction L. A radial direction R is generally orthogonal to the fuel nozzle centerline axis 206 and a circumferential direction C is taken about the fuel nozzle centerline axis 206. An upstream end (not shown) of the fuel nozzle assembly 111 is also referred to as a forward end, while a downstream end of the fuel nozzle assembly 111 is also referred to as an aft end 208.

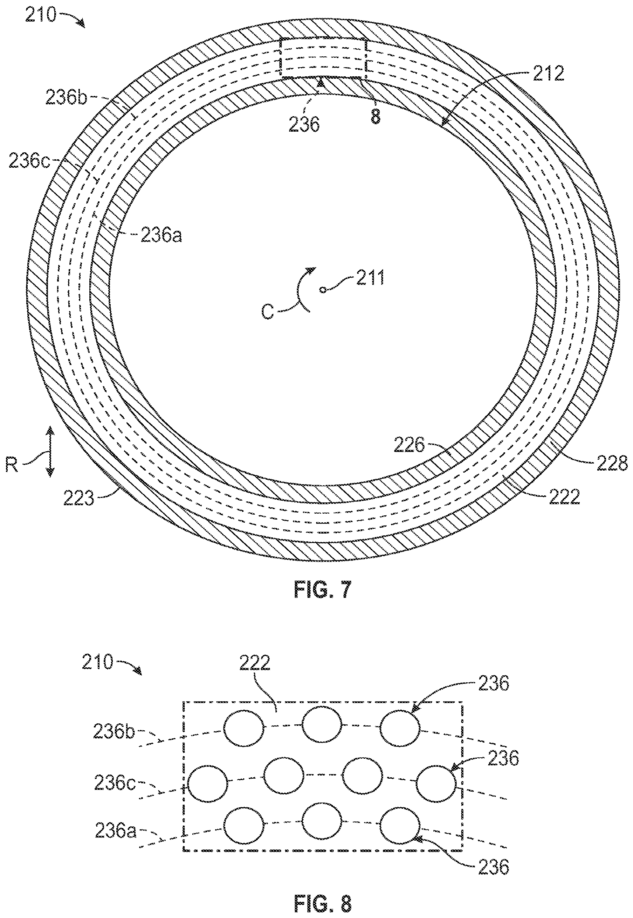

As shown in FIG. 3, a heat shield 210 is included at the aft end 208 of the fuel nozzle assembly 111. The heat shield 210 is generally formed radially outward from, and circumferentially about a heat shield centerline axis 211, which is aligned with the fuel nozzle centerline axis 206. The heat shield 210 defines a fuel nozzle opening 212, where a pre-mixed fuel/air mixture from the pilot fuel nozzle 204, and surrounding pilot air ducts, is injected to be ignited and burned. An aft forward-looking elevational view of the heat shield 210 is depicted in, for example, FIG. 8, which will be described in more detail below.

In the illustrated embodiment, the heat shield 210 is attached to a housing aft end 201 of the fuel nozzle housing 200. In some embodiments, the heat shield 210 can be removably attached to the fuel nozzle housing 200 at the housing aft end 201. In some embodiments, the heat shield 210 can be fixedly attached (e.g., via welding) to the fuel nozzle housing 200 at the housing aft end 201. In some embodiments, the heat shield 210 can be integrally formed with the fuel nozzle housing 200 as a single, monolithic piece. In some embodiments, the fuel nozzle housing 200 and the heat shield 210 can be formed of the same material. In some embodiments, the fuel nozzle housing 200 can be formed of a first material and the heat shield 210 can be formed of a second material having one or more properties that differ from those of the first material. In some embodiments, the heat shield 210 (and the fuel nozzle housing 200) can be formed via one or more additive manufacturing techniques or processes (e.g., layer-additive processes, layer-subtractive processes, or hybrid processes).

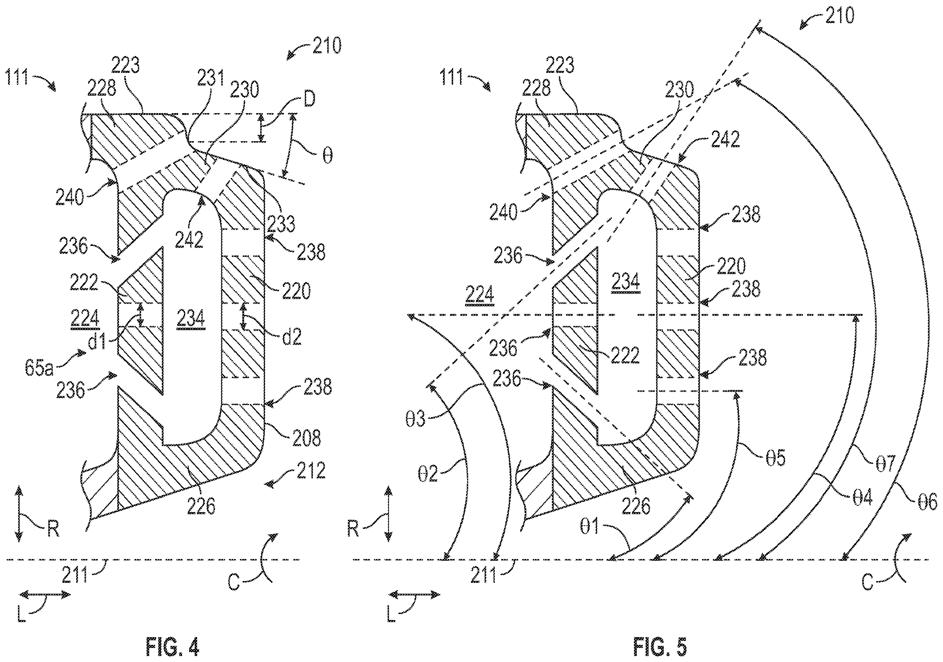

FIGS. 4 and 5 are partial, cross-sectional, elevational views depicting the heat shield 210 of FIG. 3. As shown in FIGS. 4 and 5, the heat shield 210 includes an annular aft wall 220 and an annular forward wall 222 that extend in the radial direction R. The aft wall 220 and the forward wall 222 also extend in the circumferential direction C about the heat shield centerline axis 211. In the illustrated embodiment, the aft wall 220 defines an aft end of the heat shield 210 (e.g., corresponding to the aft end 208 of the fuel nozzle assembly 111 of FIGS. 2 and 3) and is disposed adjacent to the combustion chamber 102 (FIG. 2). The forward wall 222 abuts at least a portion of the housing aft end 201 of the fuel nozzle housing 200.

With continued reference to FIGS. 4 and 5, an outer forward wall extension 228 extends from the forward wall 222 generally forward in the longitudinal direction L, as well as circumferentially about the heat shield centerline axis 211. The outer forward wall extension 228 can be joined to the fuel nozzle housing 200 (FIG. 3) and thereby partially define a cooling flow passage 224 therewithin. In the illustrated embodiment, an end portion of the cooling flow passage 224 is disposed adjacent to the forward wall 222. Some of the first portion of compressed air 65a (FIG. 4) that enters the fuel nozzle assembly 111 (FIG. 2) is provided to the cooling flow passage 224 to be used as a coolant to cool the heat shield 210, as will be described below. In the illustrated embodiment, an outer surface 223 of the outer forward wall extension 228 is substantially cylindrical. In some embodiments, the outer surface 223 of the outer forward wall extension 228 can be conical. In some embodiments, the heat shield 210 can further include a lower forward wall extension (not shown) that can be joined to the fuel nozzle housing 200.

The heat shield 210 further includes an annular inner wall 226 and an annular outer wall 230 that extend in the longitudinal direction L and the circumferential direction C. The inner wall 226 defines a portion of the fuel nozzle opening 212 of the heat shield 210. The outer wall 230 extends between the aft wall 220 and the forward wall 222. In the illustrated embodiment, the inner wall 226 and the outer wall 230 are conical. In some embodiments, at least one of the inner wall 226 or the outer wall 230 can be substantially cylindrical.

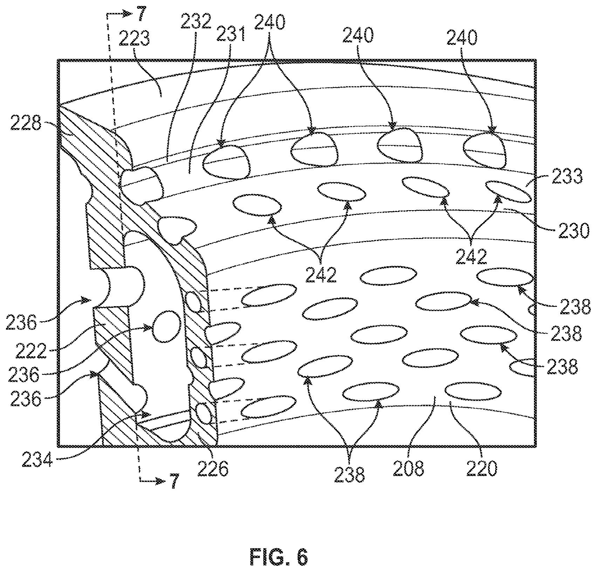

FIG. 6 is a partial, forward-looking perspective view of the heat shield 210 of FIGS. 3 to 5. As shown in FIGS. 4 and 6, an outer surface 233 of the outer wall 230 extends from the forward wall 222 at a location 231 that is at a radial distance D (FIG. 4), as measured along the radial direction R, from the outer surface 223 of the outer forward wall extension 228. As such, an annular outer rim 232 (FIG. 6) is formed at the location 231. In some embodiments, the distance D (FIG. 4) can be a percentage of a total radial length of the aft end 208 of the aft wall 220, as measured from the inner wall 226 to the outer wall 230 along the radial direction R, in a range of about 2% to about 30%, in a range of about 4% to about 20%, or in a range of about 5% to about 15%. In some embodiments, the outer surface 233 of the outer wall 230 can directly abut the outer surface 223 of the outer forward wall extension 228 such that the heat shield 210 does not include the outer rim 232.

As shown in FIG. 4, in the illustrated embodiment, at least the outer surface 233 of the outer wall 230 is conical and slopes longitudinally downward from the forward wall 222 to the aft wall 220 relative to the heat shield centerline axis 211. In other words, at least the outer surface 233 of the outer wall 230 extends from the forward wall 222 to the aft wall 220 at an outer wall angle (θ) that is nonparallel to the heat shield centerline axis 211. In the illustrated embodiment, the outer wall angle θ is a negative angle (e.g., extending radially inward along the radial direction R) as measured relative to the heat shield centerline axis 211.

In some embodiments, the outer wall angle θ, as measured relative to the heat shield centerline axis 211, can be less than about -60 degrees, less than about -30 degrees, or less than about -15 degrees. In some embodiments, the outer wall angle θ, as measured relative to the heat shield centerline axis 211, can be in a range of about -80 degrees to about -1 degree, inclusive, in a range of about -40 degrees to about -3 degrees, inclusive, or in a range of about - 20 degrees to about -5 degrees, inclusive. In some embodiments, the outer wall angle θ can be a positive angle (e.g., extending radially outward along the radial direction R) as measured relative to the heat shield centerline axis 211. In some embodiments, at least the outer surface 233 of the outer wall 230 can be substantially cylindrical such that the outer surface 233 extends in the longitudinal direction L substantially parallel (e.g., parallel to within five degrees) to the heat shield centerline axis 211.

With continued reference to FIG. 4, the heat shield 210 further includes an internal cooling cavity 234. The internal cooling cavity 234 is defined and enclosed by the aft wall 220, the inner wall 226, the forward wall 222, and the outer wall 230. More specifically, the internal cooling cavity 234 is separated from the cooling flow passage 224 by the forward wall 222, from the fuel nozzle opening 212 by the inner wall 226, and from the combustion chamber 102 (FIG. 2) by the aft wall 220 and the outer wall 230. In other words, in the illustrated embodiment, the forward wall 222 is disposed between the cooling flow passage 224 and the internal cooling cavity 234 along the heat shield centerline axis 211, and the aft wall 220 is disposed aft of the forward wall 222 (e.g., toward the aft end 208) relative to the heat shield centerline axis 211.

In the illustrated embodiment, both the aft wall 220 and the forward wall 222 extend substantially parallel (e.g., parallel to within five degrees) to the radial direction R and to each other. In other words, both the aft wall 220 and the forward wall 222 extend substantially perpendicular (e.g., perpendicular to within five degrees) to the heat shield centerline axis 211. In some embodiments, at least one of the aft wall 220 or the forward wall 222 can extend at a nonparallel angle to the radial direction R. In some embodiments, the aft wall 220 can extend at a nonparallel angle relative to the forward wall 222.

Referring to FIGS. 4 to 6, the heat shield 210 further includes pluralities of exhaust apertures that direct flow of the first portion of compressed air 65a that is provided to the cooling flow passage 224 (FIGS. 4 and 5) through the heat shield 210 to the combustion chamber 102 (FIG. 2), e.g., by first flowing through the internal cooling cavity 234 and/or bypassing the internal cooling cavity 234. More specifically, in the illustrated embodiment, the heat shield 210 includes a plurality of first exhaust apertures 236 defined by the forward wall 222 that opens into the cooling flow passage 224 and extends through the forward wall 222 into the internal cooling cavity 234, a plurality of second exhaust apertures 238 defined by the aft wall 220 that opens into the internal cooling cavity 234 and extends through the aft wall 220 to the aft end 208 of the heat shield 210, a plurality of third exhaust apertures 240 defined by the forward wall 222 that opens into the cooling flow passage 224 and extends through the forward wall 222 to the outer surface 233 of the outer wall 230, and a plurality of fourth exhaust apertures 242 defined by the outer wall 230 that opens into the internal cooling cavity 234 and extends through the outer wall 230 to the outer surface 233 of the outer wall 230.

In this way, the plurality of first exhaust apertures 236 provides fluid communication between the cooling flow passage 224 and the internal cooling cavity 234 while the plurality of second exhaust apertures 238 provides fluid communication between the internal cooling cavity 234 and the combustion chamber 102 (FIG. 2) adjacent to the aft end 208. In addition, the plurality of third exhaust apertures 240 provides direct fluid communication between the cooling flow passage 224 and the combustion chamber 102 (FIG. 2), bypassing the internal cooling cavity 234, and toward the outer surface 223 of the outer forward wall extension 228. Further, the plurality of fourth exhaust apertures 242 provides fluid communication between the internal cooling cavity 234 and the combustion chamber 102 (FIG. 2) in addition to the plurality of second exhaust apertures 238, but more toward the outer surface 223 of the outer forward wall extension 228.

Thus, and with reference again to FIG. 3, the first portion of compressed air 65a from the HP compressor 24 (FIG. 1) enters the cooling flow passage 224 of the fuel nozzle housing 200 of the fuel nozzle assembly 111 and is directed through the cooling flow passage 224 to the heat shield 210 at the aft end 208 of the fuel nozzle assembly 111. A portion of the compressed air 65a flows from the cooling flow passage 224 and into the internal cooling cavity 234 via the plurality of first exhaust apertures 236 and then to the combustion chamber 102 (FIG. 2) via the plurality of second exhaust apertures 238 or the plurality of fourth exhaust apertures 242 (FIG. 4), e.g., along a first cooling flow path 248a or a second cooling flow path 248b, as shown in FIG. 3 respectively. Concurrently, another portion of the compressed air 65a flows from the cooling flow passage 224 and directly to the combustion chamber 102 via the plurality of third exhaust apertures 240 (FIG. 4), e.g., along a third cooling flow path 248c (FIG. 3). In other words, the portion of compressed air 65a that flows along the third cooling flow path 248c bypasses the internal cooling cavity 234 entirely.

In this way, during operation of the turbine engine 10 (FIG. 1), the heat shield 210 exerts a double pressure drop to the first portion of compressed air 65a from the HP compressor 24 (FIG. 1) that flows through the cooling flow passage 224 of the fuel nozzle housing 200 of the fuel nozzle assembly 111 (FIG. 3) and to the combustion chamber 102 (FIG. 2) through the heat shield 210. Particularly, the first portion of compressed air 65a experiences a first pressure drop as the compressed air flows through the cooling flow passage 224 of the housing and then a second pressure drop as the compressed air flow through the internal cooling cavity 234 of the heat shield. This double pressure-drop can provide improved cooling effectiveness of the heat shield by impingement heat transfer along the backside of the aft wall 220 using flow through cooling flow passage 224 and by multi-holes cooling through the aft wall 220 (e.g., via the plurality of second exhaust apertures 238 and the plurality of fourth exhaust apertures 242) and thus can provide improved durability of the heat shield 210, as compared to heat shields without the benefit of the present disclosure. The heat shield 210 can also provide improved flame stability, combustion efficiency, operability, and durability of the combustor 100 and the fuel nozzle assembly 111, as compared to combustors without the benefit of the present disclosure.

In some embodiments, the heat shield 210 can provide at least 50% of a total pressure differential provided by the fuel nozzle assembly 111 between the diffuser section 122 and the combustion chamber 102. In some embodiments, the heat shield 210 can provide at least 20% of a total pressure differential provided by the fuel nozzle assembly 111. In some embodiments, the heat shield 210 can provide between about 10% and about 80% of a total pressure differential provided by the fuel nozzle assembly 111. In some embodiments, the heat shield 210 can provide between about 20% and about 60% of a total pressure differential provided by the fuel nozzle assembly 111. In some embodiments, the heat shield 210 can provide between about 30% and about 50% of a total pressure differential provided by the fuel nozzle assembly 111.

As discussed in greater detail below, the plurality of first exhaust apertures 236, the plurality of second exhaust apertures 238, the plurality of third exhaust apertures 240, and the plurality of fourth exhaust apertures 242 of the heat shield 210 are arranged to provide the increased cooling to the heat shield 210 via the first portion of compressed air 65a.

FIG. 7 is a cross-sectional view of the heat shield 210 taken along line 7-7 in FIG. 6. As shown in FIG. 7, the plurality of first exhaust apertures 236 is arranged along the forward wall 222 in at least a first row 236a, a second row 236b, and a third row 236c that extend circumferentially around the forward wall 222 in the circumferential direction C. The first row 236a is disposed radially toward the inner wall 226, the second row 236b is disposed radially toward the outer wall 230 (FIG. 6), and the third row 236c is disposed radially between the first row 236a and the second row 236b. In other words, the first row 236a is disposed radially inward of the second row 236b and the third row 236c, the second row 236b is disposed radially outward of the first row 236a and the third row 236c, and the third row 236c is disposed radially inward of the second row 236b and radially outward of the first row 236a.

FIG. 8 is a partial, detail view taken along the area labeled "8" in FIG. 7. As shown in FIG. 8, each aperture of the plurality of first exhaust apertures 236 arranged in the first row 236a is radially aligned, in the radial direction R (FIG. 7), with a circumferentially adjacent aperture of the plurality of first exhaust apertures 236 arranged in the second row 236b. On the other hand, each aperture of the plurality of first exhaust apertures 236 arranged in the third row 236c is radially offset, in the radial direction R (FIG. 7), from circumferentially adjacent apertures of the plurality of first exhaust apertures 236 arranged in the first row 236a and the second row 236b. In other words, each first exhaust aperture 236 arranged in the third row 236c is disposed circumferentially between, in the circumferential direction C (FIG. 7), two radially adjacent first exhaust apertures 236 in the first row 236a and two radially adjacent first exhaust apertures 236 in the second row 236b.

Referring again to FIG. 5, in the illustrated embodiment, each aperture of the plurality of first exhaust apertures 236 arranged in the first row 236a (FIG. 7) extends longitudinally through the forward wall 222 at a first angle (θ1) relative to the heat shield centerline axis 211, and each aperture of the plurality of first exhaust apertures 236 arranged in the second row 236b (FIG. 7) extends longitudinally through the forward wall 222 at a second angle (θ2) relative to the heat shield centerline axis 211. In the illustrated embodiment, the first angle θ1 is different than the second angle θ2. In some embodiments, the first angle θ1 and the second angle θ2 can be substantially equal (i.e., within five degrees). Further, each aperture of the plurality of first exhaust apertures 236 arranged in the third row 236c (FIG. 7) extends through the forward wall 222 at a third angle (θ3) relative to the heat shield centerline axis 211. In the illustrated embodiment, the third angle θ3 is different than the first angle θ1 and the second angle θ2. In some embodiments, the third angle θ3 can be substantially equal (e.g., within five degrees) to at least one of the first angle θ1 or the second angle θ2. In some embodiments, at least one of the first angle θ1, the second angle 02, or the third angle θ3 can be a compound angle, e.g., that extends at a tangential angle and a radial angle relative to the heat shield centerline axis 211.

Referring again to FIG. 4, in the illustrated embodiment, each aperture of the plurality of first exhaust apertures 236 has a diameter d1 that is the same as that of the other apertures of the plurality of first exhaust apertures 236. In some embodiments, the apertures of the plurality of first exhaust apertures 236 arranged in at least the third row 236c (FIGS. 7 and 8) can have a diameter that differs from that of the other apertures of the plurality of first exhaust apertures 236 arranged in the first row 236a or the second row 236b (FIGS. 7 and 8). In some embodiments, at least some of the apertures of the plurality of first exhaust apertures 236 can have a variable diameter.

The number and the arrangement of the plurality of first exhaust apertures 236 is not limited to any particular number or arrangement, and the number and the arrangement can be selected based on a desired cooling effect to be provided to the heat shield 210. For example, in some embodiments, the plurality of first exhaust apertures 236 can be arranged circumferentially along the forward wall 222 in one row or two rows. In some embodiments, the plurality of first exhaust apertures 236 can be arranged circumferentially along the forward wall 222 in at least six rows.

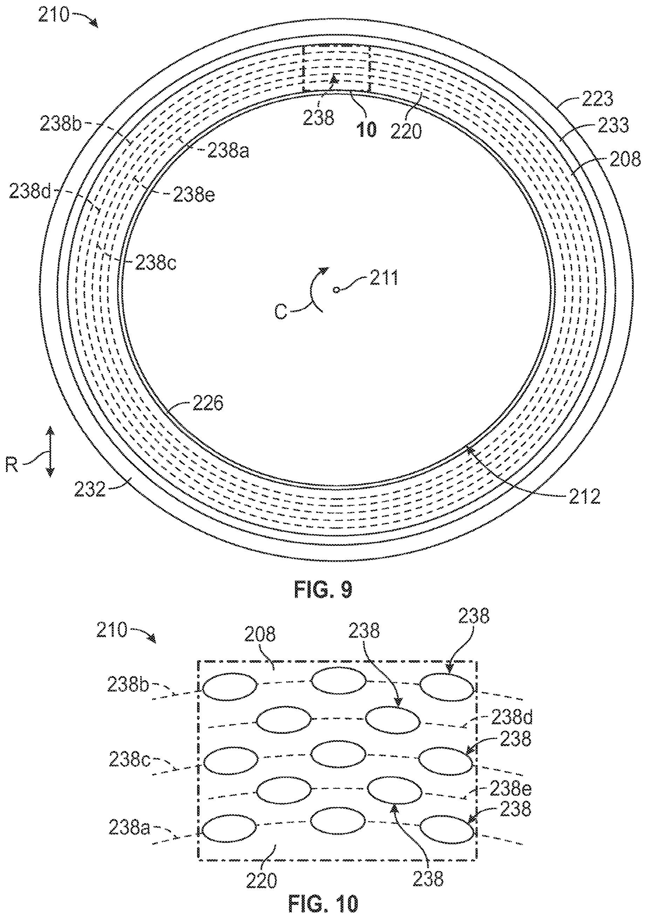

FIG. 9 is a forward-looking elevational view of the heat shield 210 of FIGS. 3 to 6. For ease of illustration, the plurality of second exhaust apertures 238 is not shown in FIG. 9. As shown in FIG. 9, the plurality of second exhaust apertures 238 is arranged along the aft wall 220 in a first row 238a, a second row 238b, a third row 238c, a fourth row 238d, and a fifth row 238e that extend circumferentially around the aft wall 220 in the circumferential direction C. The first row 238a is disposed radially toward the inner wall 226, the second row 238b is disposed radially toward the outer wall 230, the third row 238c is disposed radially between the first row 238a and the second row 238b, the fourth row 238d is disposed radially between the second row 238b and the third row 238c, and the fifth row 238e is disposed radially between the first row 238a and the third row 238c.

FIG. 10 is a partial, detail view of a portion of the plurality of second exhaust apertures 238 within the area labeled "10" in FIG. 9. As shown in FIG. 10, in the illustrated embodiment, each aperture of the plurality of second exhaust apertures 238 arranged in the first row 238a is radially aligned, in the radial direction R (FIG. 9), with circumferentially adjacent second exhaust apertures 238 arranged in the second row 236b and the third row 236c. Likewise, each aperture of the plurality of second exhaust apertures 238 arranged in the fourth row 238d is radially aligned, in the radial direction R, to a circumferentially adjacent second exhaust aperture 238 arranged in the fifth row 238e. Further, each aperture of the plurality of second exhaust apertures 238 arranged in the fourth row 238d and the fifth row 238e is radially offset, in the radial direction R (FIG. 9), from circumferentially adjacent second exhaust apertures 238 arranged in the first row 238a, the second row 238b, and the third row 238c. In other words, each second exhaust aperture 238 arranged in the fourth row 238d is disposed circumferentially between, in the circumferential direction C (FIG. 9), two radially adjacent second exhaust apertures 238 in the second row 238b and two radially adjacent second exhaust apertures 238 in the third row 238c. Likewise, each second exhaust aperture 238 arranged in the fifth row 238e is disposed circumferentially between, in the circumferential direction C (FIG. 9), two radially adjacent second exhaust apertures 238 in the first row 238a and two radially adjacent second exhaust apertures 238 in the third row 238c.

Referring again to FIG. 5, each aperture of the plurality of second exhaust apertures 238 extends through the aft wall 220 at a fourth angle (θ4) relative to the heat shield centerline axis 211. In the illustrated embodiment, the fourth angle θ4 is a compound angle relative to the heat shield centerline axis 211 that is the sum of a tangential angle taken in a plane extending in the longitudinal direction L and a radial angle taken in a plane extending in the radial direction R. In the illustrated embodiment, the compound angle (i.e., the fourth angle θ4) of each aperture of the plurality of second exhaust apertures 238 is the same as that of the other apertures of the plurality of second exhaust apertures 238. In some embodiments, a tangential angle of the fourth angle θ4 can be in a range of about -70 degrees to about -5 degrees or in a range of about 5 degrees to about 70 degrees, inclusive, and a radial angle of the fourth angle θ4 can be in a range of about -65 degrees to about -5 degrees or in a range of about 5 degrees to about 65 degrees, inclusive. In some embodiments, a tangential angle of the fourth angle θ4 can be in a range of about -50 degrees to about -10 degrees or in a range of about 10 degrees to about 50 degrees, inclusive, and a radial angle of the fourth angle θ4 can be in a range of about -50 degrees to about -10 degrees or in a range of about 10 degrees to about 50 degrees, inclusive. In some embodiments, a tangential angle of the fourth angle θ4 can be in a range of about -45 degrees to about -15 degrees or in a range of about 15 degrees to about 45 degrees, inclusive, and a radial angle of the fourth angle θ4 can be in a range of about -45 degrees to about -15 degrees or in a range of about 15 degrees to about 45 degrees, inclusive. In some embodiments, at least some apertures of the plurality of second exhaust apertures 238 can extend through the aft wall 220 relative to the heat shield centerline axis 211 at a non-compound angle, e.g., extending only at a radial angle or a tangential angle relative to the heat shield centerline axis 211.

Referring again to FIG. 4, in the illustrated embodiment, each aperture of the plurality of second exhaust apertures 238 has a diameter d2 that is the same as that of the other apertures of the plurality of second exhaust apertures 238. In some embodiments, the apertures of the plurality of second exhaust apertures 238 arranged in at least the third row 238c (FIGS. 9 and 10) can have a diameter that differs from that of the other apertures of the plurality of second exhaust apertures 238 arranged in the first row 238a, the second row 238b, the fourth row 238d, or the fifth row 238e (FIGS. 9 and 10). In some embodiments, at least some of the apertures of the plurality of second exhaust apertures 238 can have a variable diameter.

The number and the arrangement of the plurality of second exhaust apertures 238 is not limited to any particular number or arrangement, and the number and the arrangement can be selected based on a desired cooling effect to be provided to the heat shield 210. For example, in some embodiments, the plurality of second exhaust apertures 238 can be arranged circumferentially along the aft wall 220 in one row or two rows. In some embodiments, the plurality of second exhaust apertures 238 can be arranged circumferentially along the aft wall 220 in six rows or more rows.

Referring again to FIGS. 9 and 10, in some embodiments, at least some of the apertures of the plurality of second exhaust apertures 238 can extend longitudinally through the aft wall 220 substantially parallel (e.g., parallel to within five degrees) to the heat shield centerline axis 211 (i.e., substantially perpendicular to the radial direction R (FIG. 9)). In some embodiments, each aperture of the plurality of second exhaust apertures 238 of a particular row 238a, 238b, 238c, 238d, and 238e can extend at a different angle than apertures of the plurality of second exhaust apertures 238 arranged in other rows 238a, 238b, 238c, 238d, and 238e. For example, in some embodiments, each aperture of the plurality of second exhaust apertures 238 arranged in the first row 238a can extend through the aft wall 220 at the fourth angle θ4 (FIG. 5), and each aperture of the plurality of second exhaust apertures 238 arranged in the second row 238b can extend through the aft wall 220 at a fifth angle (θ5) (FIG. 5) that is different than the fourth angle θ4. In some embodiments, each aperture of the plurality of second exhaust apertures 238 arranged in the first row 238a, the second row 238b, and the third row 238c can extend through the aft wall 220 at the fourth angle θ4 (FIG. 5), and each aperture of the plurality of second exhaust apertures 238 arranged in the fourth row 238d and the fifth row 238e can extend through the aft wall 220 at the fifth angle θ5 (FIG. 5).

In some embodiments, some apertures of the plurality of second exhaust apertures 238 arranged in a particular row 238a, 238b, 238c, 238d, and 238e can extend at an angle that is different than that of other apertures of the plurality of second exhaust apertures 238 arranged in the same row 238a, 238b, 238c, 238d, and 238e. For example, in some such embodiments, the plurality of second exhaust apertures 238 arranged in the third row 238c can include a first set of apertures that can extend through the aft wall 220 at the fourth angle θ4 (FIG. 5) and a second set of apertures that can extend through the aft wall 220 at the fifth angle θ5 (FIG. 5).

Referring again to FIG. 6, in the illustrated embodiment, each aperture of the plurality of fourth exhaust apertures 242 is radially aligned, in the radial direction R (FIG. 5), with a circumferentially adjacent aperture of the plurality of third exhaust apertures 240. In some embodiments, each aperture of the plurality of fourth exhaust apertures 242 can be radially offset, in the radial direction R (FIG. 5), from circumferentially adjacent apertures of the plurality of third exhaust apertures 240. In other words, in such embodiments, of the plurality of fourth exhaust apertures 242 can be disposed circumferentially between, in the circumferential direction C (FIG. 5), two radially adjacent apertures of the plurality of third exhaust apertures 240.

Referring again to FIG. 5, in the illustrated embodiment, the plurality of third exhaust apertures 240 extends through the forward wall 222 at a sixth angle (θ6) relative to the heat shield centerline axis 211, and the plurality of fourth exhaust apertures 242 extends through the outer wall 230 at a seventh angle (θ7) relative to the heat shield centerline axis 211. In the illustrated embodiment, the sixth angle θ6 and the seventh angle θ7 are compound angles that differ from one another. In some embodiments, the sixth angle θ6 and the seventh angle θ7 can be compound angles that are substantially identical (e.g., +/- five degrees). In some embodiments, at least one of the sixth angle θ6 or the seventh angle θ7 can be a non-compound angle relative to the heat shield centerline axis 211, e.g., extending only at a radial angle or a tangential angle relative to the heat shield centerline axis 211.

The number and the arrangement of the plurality of third exhaust apertures 240 and the plurality of fourth exhaust apertures 242 is not limited to any particular number or arrangement, and the number and the arrangement can be selected based on a desired cooling effect to be provided to the heat shield 210. For example, in some embodiments, a number of apertures of the plurality of third exhaust apertures 240 can be different than a number of apertures of the plurality of fourth exhaust apertures 242. In some embodiments, at least the plurality of fourth exhaust apertures 242 can be arranged along the outer wall 230 in at least two rows extending circumferentially around the outer wall 230 in the circumferential direction C (FIG. 5). For example, in some such embodiments, the plurality of fourth exhaust apertures 242 can be arranged in a first row disposed toward the outer rim 232 (FIG. 6) and a second row disposed toward the aft wall 220. In some embodiments, the heat shield 210 may not include at least one of the plurality of third exhaust apertures 240 or the plurality of fourth exhaust apertures 242.

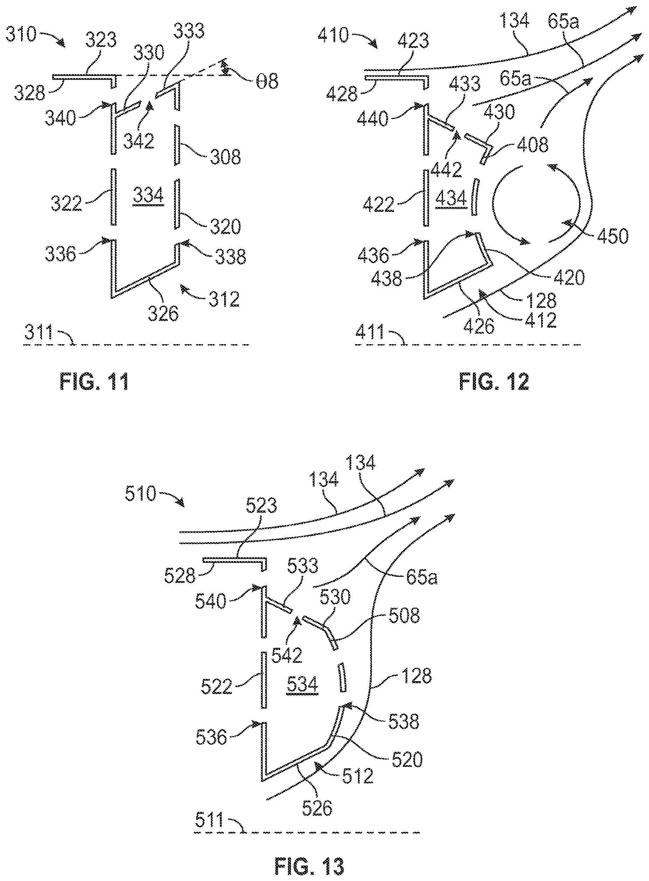

FIG. 11 is a partial, schematic representation of another exemplary heat shield 310 of a fuel nozzle assembly, e.g., the fuel nozzle assembly 111 of FIG. 3, according to another embodiment. The heat shield 310 is substantially similar to the heat shield 210 of FIGS. 3 to 10. The same reference numerals or similar reference numerals will be used for components of the heat shield 310 that are the same as, or similar to, the components of the heat shield 210 discussed above with regard to FIGS. 3 to 10. The description of such components above of the heat shield 210 also applies to these components of the heat shield 310, and a detailed description of these components is omitted here.

As shown in FIG. 11, the heat shield 310 includes an annular aft wall 320 at an aft end 308 thereof, an annular forward wall 322, an annular inner wall 326 defining a fuel nozzle opening 312, an annular outer wall 330, an outer forward wall extension 328 having an outer surface 323, and an internal cooling cavity 334, similar to the aft wall 220, the forward wall 222, the inner wall 226, the outer wall 230, the outer forward wall extension 228, and the internal cooling cavity 234 of the heat shield 210 of FIGS. 3 to 10. Further, the heat shield 310 includes a plurality of first exhaust apertures 336, a plurality of second exhaust apertures 338, a plurality of third exhaust apertures 340, and a plurality of fourth exhaust apertures 342, similar to the plurality of first exhaust apertures 236, the plurality of second exhaust apertures 238, the plurality of third exhaust apertures 240, and the plurality of fourth exhaust apertures 242 of the heat shield 210 of FIGS. 3 to 10.

In the illustrated embodiment of FIG. 11, at least an outer surface 333 of the outer wall 330 is conical and slopes radially outward from the forward wall 322 to the aft wall 320 along a heat shield centerline axis 311 (e.g., that is aligned with the fuel nozzle centerline axis 206 (FIG. 3)). In other words, at least the outer surface 333 of the outer wall 330 extends from the forward wall 322 to the aft wall 320 at an outer wall angle (θ8) that is nonparallel to the heat shield centerline axis 311. In the illustrated embodiment, the outer wall angle θ8 is a positive angle (e.g., extending radially outward along the radial direction R) as measured relative to the heat shield centerline axis 311. In this way, the heat shield 310 can provide increased operational performance to a turbine engine having a fuel nozzle assembly with the heat shield 310, e.g., the turbine engine 10 with the fuel nozzle assembly 111 of FIGS. 1 and 2, as compared to turbine engines without the benefit of the present disclosure. Particularly, and with reference to FIG. 2, the heat shield 310 can promote flow of the pilot air-fuel mixture 128 and the main fuel stream 134 radially outward relative to the fuel nozzle centerline axis 206 and toward the outer liner 104 or the inner liner 106, which can provide for a leaner fuel-air mixture that is ignited for the main flame 138 and this provided for a leaner burn combustion while further reducing NOₓ emissions.

In some embodiments, the outer wall angle θ8, as measured relative to the heat shield centerline axis 311, can be greater than about 1 degree, greater than about 3 degrees, greater than about 5 degrees, greater than about 10 degrees, greater than about 15 degrees, or greater than about 25 degrees. In some embodiments, the outer wall angle θ8, as measured relative to the heat shield centerline axis 311, can be in a range of about 1 degree to about 80 degrees, inclusive, in a range of about 3 degrees to about 45 degrees, inclusive, or in a range of about 5 degrees to about 20 degrees, inclusive.

FIG. 12 is a partial, schematic representation of yet another exemplary heat shield 410 of a fuel nozzle assembly, e.g., the fuel nozzle assembly 111 of FIG. 3, according to another embodiment. The heat shield 410 is substantially similar to the heat shield 210 of FIGS. 3 to 10 and to the heat shield 310 of FIG. 11. The same reference numerals or similar reference numerals will be used for components of the heat shield 410 that are the same as, or similar to, the components of the heat shields 210 and 310 discussed above with regard to FIGS. 3 to 11. The description of such components above of the heat shields 210 and 310 also applies to these components of the heat shield 410, and a detailed description of these components of the heat shield 410 is omitted here.

As shown in FIG. 12, the heat shield 410 includes an annular aft wall 420 at an aft end 408 thereof, an annular forward wall 422, an annular inner wall 426 defining a fuel nozzle opening 412, an annular outer wall 430, an outer forward wall extension 428 having an outer surface 423, and an internal cooling cavity 434, similar to the aft wall 220, the forward wall 222, the inner wall 226, the outer wall 230, the outer forward wall extension 228, and the internal cooling cavity 234 of the heat shield 210 of FIGS. 3 to 10. Further, the heat shield 410 includes a plurality of first exhaust apertures 436, a plurality of second exhaust apertures 438, a plurality of third exhaust apertures 440, and a plurality of fourth exhaust apertures 442, similar to the plurality of first exhaust apertures 236, the plurality of second exhaust apertures 238, the plurality of third exhaust apertures 240, and the plurality of fourth exhaust apertures 242 of the heat shield 210 of FIGS. 3 to 10. Similar to the outer wall 230 of the heat shield 210 of FIGS. 3 to 10, at least an outer surface 433 of the outer wall 430 of the heat shield 410 is conical and slopes radially inward from the forward wall 422 to the aft wall 420 relative to a heat shield centerline axis 411 (e.g., that is aligned with the fuel nozzle centerline axis 206 (FIG. 3)).

In the illustrated embodiment of FIG. 12, a cross-sectional profile (as shown in FIG. 12) of the aft wall 420 extending from the outer wall 430 to the inner wall 426 has a concave shape. In this way, and as shown schematically in FIG. 12, the concave shaped surface of the aft end 408 of the heat shield 410 can provide increased operational performance to a turbine engine having a fuel nozzle assembly with the heat shield 410, e.g., the turbine engine 10 with the fuel nozzle assembly 111 of FIGS. 1 and 2, as compared to turbine engines without the benefit of the present disclosure. Particularly, during low power operation of the turbine engine 10 (e.g., relative to a normal, desired, steady state, etc., operation of the turbine engine 10), a recirculation zone 450 is formed that recirculates the portion of compressed air 65a that flows through the cooling flow passage 224 and to the combustion chamber 102 (e.g., through the internal cooling cavity 434 via the plurality of first exhaust apertures 436, the plurality of second exhaust apertures 438, and the plurality of fourth exhaust apertures 442, or directly through the plurality of third exhaust apertures 440) with the pilot air-fuel mixture 128 and the main fuel stream 134 (FIGS. 2 and 3). In this way, the heat shield 410 can provide for improved flame stability while the turbine engine 10 operates at low power, which can improve an overall lifecycle durability of the heat shield 410 and the fuel nozzle assembly 111.

FIG. 13 is a partial, schematic representation of still another exemplary heat shield 510 of a fuel nozzle assembly, e.g., the fuel nozzle assembly 111 of FIG. 3, according to another embodiment. The heat shield 510 is substantially similar to the heat shield 210 of FIGS. 3 to 10, the heat shield 310 of FIG. 11, and the heat shield 410 of FIG. 12. The same reference numerals or similar reference numerals will be used for components of the heat shield 510 that are the same as, or similar to, the components of the heat shields 210, 310, and 410 discussed above with regard to FIGS. 3 to 12. The description of such components above of the heat shields 210, 310, and 410 also applies to these components of the heat shield 510, and a detailed description of these components is omitted here.

As shown in FIG. 13, the heat shield 510 includes an annular aft wall 520 at an aft end 508 thereof, an annular forward wall 522, an annular inner wall 526 defining a fuel nozzle opening 512, an annular outer wall 530, an outer forward wall extension 528 having an outer surface 523, and an internal cooling cavity 534, similar to the aft wall 220, the forward wall 222, the inner wall 226, the outer wall 230, the outer forward wall extension 228, and the internal cooling cavity 234 of the heat shield 210 of FIGS. 3 to 10. Further, the heat shield 510 includes a plurality of first exhaust apertures 536, a plurality of second exhaust apertures 538, a plurality of third exhaust apertures 540, and a plurality of fourth exhaust apertures 542, similar to the plurality of first exhaust apertures 236, the plurality of second exhaust apertures 238, the plurality of third exhaust apertures 240, and the plurality of fourth exhaust apertures 242 of the heat shield 210 of FIGS. 3 to 10. Similar to the outer wall 230 of the heat shield 210 of FIGS. 3 to 10 and the outer wall 430 of the heat shield 410 of FIG. 12, at least an outer surface 533 of the outer wall 530 of the heat shield 510 is conical and slopes radially inward from the forward wall 522 to the aft wall 520 relative to a heat shield centerline axis 511 (e.g., that is aligned with the fuel nozzle centerline axis 206 (FIG. 3)).

In the illustrated embodiment of FIG. 13, a cross-sectional profile (as shown in FIG. 13) of the aft wall 520 extending from the outer wall 530 to the inner wall 526 has a convex shape. In this way, and as shown schematically in FIG. 13, the convex shaped surface of the aft end 508 of the heat shield 510 can provide increased operational performance to a turbine engine having a fuel nozzle assembly with the heat shield 510, e.g., the turbine engine 10 with the fuel nozzle assembly 111 of FIGS. 1 and 2, as compared to turbine engines without the benefit of the present disclosure. Particularly, during high power operation of the turbine engine 10 (e.g., e.g., relative to a normal, desired, steady state, etc., operation of the turbine engine 10), the aft end 508 of the heat shield 510 facilitates earlier interaction between the pilot air-fuel mixture 128 and the main fuel stream 134 (FIGS. 2 and 3), as compared to the heat shield 210 of FIGS. 3 to 10 and the heat shield 410 of FIG. 12. In this way, the heat shield 510 can provide for improved flame stability while the turbine engine 10 operates at high power, which can improve an overall lifecycle durability of the heat shield 510 and the fuel nozzle assembly 111.

Accordingly, the present disclosure provides for an improved heat shield of a fuel nozzle for a turbine engine that maximizes cooling of the heat shield from compressed air as the compressed air flows through the fuel nozzle and enters the combustion chamber. Particularly, embodiments of the present disclosure can provide a heat shield with a closed internal cooling cavity that exerts a double pressure-drop to the compressed air flowing through the fuel nozzle, which can provide for improved flame stability and combustion efficiency of the combustor, as well as improved durability of the heat shield itself.

Further aspects of the present disclosure are provided by the subject matter of the following clauses.

A heat shield for a fuel nozzle of a turbine engine comprises an aft wall extending at an aft end of the heat shield along a radial direction that extends perpendicular to a heat shield centerline axis defined by the heat shield, a forward wall extending along the radial direction and disposed between the aft wall and a cooling flow passage partially defined by the forward wall, an outer wall extending from the forward wall to the aft wall such that an annular outer rim is defined along an outer surface of the outer wall between the forward wall and the outer wall, an inner wall extending from the forward wall to the aft wall, and an internal cooling cavity defined and enclosed by the aft wall, the forward wall, the outer wall, and the inner wall, each of the aft wall, the forward wall, the outer wall, and the inner wall being annular such that the internal cooling cavity is annular, a plurality of first exhaust apertures opening into the cooling flow passage and extending through the forward wall into the internal cooling cavity, a plurality of second exhaust apertures opening into the internal cooling cavity and extending through the aft wall, and a plurality of third exhaust apertures opening into the cooling flow passage and extending through the forward wall to the outer surface of the outer wall adjacent to the outer rim, and, during operation of the turbine engine, the plurality of first exhaust apertures and the plurality of second exhaust apertures direct flow of air from the cooling flow passage and through the internal cooling cavity to cool the heat shield from heat of combustion.

The heat shield of the preceding clause, a plurality of fourth exhaust apertures opening into the internal cooling cavity and extending through the outer wall.

The heat shield of any preceding clause, the outer wall being conical shaped and slopes radially inward from the forward wall to the aft wall relative to the heat shield centerline axis, and a cross-sectional profile of the aft wall in the radial direction has a concave shape.

The heat shield of any preceding clause, the outer wall being conical shaped and slopes radially inward from the forward wall to the aft wall relative to the heat shield centerline axis, and a cross-sectional profile of the aft wall in the radial direction has a convex shape.

The heat shield of any preceding clause, the forward wall extending substantially parallel to the aft wall.

The heat shield of any preceding clause, the outer wall extending from the forward wall to the aft wall at an angle that is nonparallel to the heat shield centerline axis.

The heat shield of any preceding clause, the outer wall sloping radially outward from the forward wall to the aft wall relative to the heat shield centerline axis.

The heat shield of any preceding clause, the outer wall being conical shaped and slopes radially inward from the forward wall to the aft wall relative to the heat shield centerline axis.

The heat shield of any preceding clause, the plurality of first exhaust apertures being arranged along the forward wall in at least a first row disposed radially toward the inner wall and a second row disposed radially toward the outer wall.

The heat shield of any preceding clause, each aperture of the plurality of first exhaust apertures arranged in the first row extending through the forward wall at a first angle relative to the heat shield centerline axis, and each aperture of the plurality of first exhaust apertures arranged in the second row extending through the forward wall at a second angle relative to the heat shield centerline axis that is different than the first angle.

The heat shield of any preceding clause, the plurality of first exhaust apertures being further arranged along the forward wall in a third row disposed radially between the first row and the second row.

The heat shield of any preceding clause, each aperture of the plurality of first exhaust apertures arranged in the first row extending through the forward wall at a first angle relative to the heat shield centerline axis, each aperture of the plurality of first exhaust apertures arranged in the second row extends through the forward wall at a second angle relative to the heat shield centerline axis that is different than the first angle, and each aperture of the plurality of first exhaust apertures arranged in the third row extends through the forward wall at a third angle relative to the heat shield centerline axis that is different than the first angle and the second angle.

The heat shield of any preceding clause, the plurality of second exhaust apertures being arranged along the aft wall in at least a first row, a second row, and a third row that extend in a circumferential direction about the heatshield centerline axis, the first row being disposed radially toward the inner wall, the second row being disposed radially toward the outer wall, and the third row being disposed radially between the first row and the second row.

The heat shield of any preceding clause, each aperture of the plurality of second exhaust apertures having a diameter that is the same as that of the other apertures of the plurality of second exhaust apertures.

The heat shield of any preceding clause, the plurality of second exhaust apertures being further arranged along the forward wall in a fourth row and a fifth row that extend in the circumferential direction, the fourth row being disposed radially between the second row and the third row, and the fifth row being disposed radially between the first row and the second row.

The heat shield of any preceding clause, each aperture of the plurality of second exhaust apertures arranged in the first row being radially aligned, in the radial direction, with circumferentially adjacent apertures of the plurality of second exhaust apertures arranged in the second row and the third row, and each aperture of the plurality of second exhaust apertures arranged in the third row and the fourth row being radially offset, in the radial direction, from circumferentially adjacent apertures of the plurality of second exhaust apertures arranged in the first row, the second row, and the third row.

The heat shield of any preceding clause, each aperture of the plurality of second exhaust apertures extending through the aft wall at a compound angle relative to the heat shield centerline axis.

The heat shield of any preceding clause, a tangential angle of the compound angle being in a range of about five degrees to about sixty-five degrees, inclusive, and a radial angle of the compound angle is in a range of about five degrees to about sixty-five degrees, inclusive.

The heat shield of any preceding clause, the compound angle of each aperture of the plurality of second exhaust apertures being the same as that of the other apertures of the plurality of second exhaust apertures.

A fuel nozzle assembly for a turbine engine comprises the heat shield of any preceding clause, a fuel nozzle housing at least partially defining the cooling flow passage, the heat shield being coupled to the fuel nozzle housing, and a fuel nozzle disposed within the fuel nozzle housing.

A fuel nozzle assembly for a turbine engine comprises a fuel nozzle housing, a fuel nozzle disposed within the fuel nozzle housing, and a heat shield coupled to the fuel nozzle housing that defines a heat shield centerline axis. The heat shield comprises an aft wall extending at an aft end of the heat shield substantially along a radial direction extending perpendicular to the heat shield centerline axis, a forward wall extending substantially along the radial direction and disposed between the aft wall and a cooling flow passage partially defined by the forward wall, an outer wall extending from the forward wall to the aft wall such that an annular outer rim is defined along an outer surface of the outer wall between the forward wall and the outer wall, an inner wall extending from the forward wall to the aft wall, and an internal cooling cavity defined and enclosed by the aft wall, the forward wall, the outer wall, and the inner wall, each of the aft wall, the forward wall, the outer wall, and the inner wall being annular such that the internal cooling cavity is annular, a plurality of first exhaust apertures opening into the cooling flow passage and extending through the forward wall into the internal cooling cavity, a plurality of second exhaust apertures opening into the internal cooling cavity and extending through the aft wall, and a plurality of third exhaust apertures opening into the cooling flow passage and extending through the forward wall to the outer surface of the outer wall adjacent to the outer rim, and, during operation of the turbine engine, the plurality of first exhaust apertures and the plurality of second exhaust apertures direct flow of air from the cooling flow passage and through the internal cooling cavity to cool the heat shield from heat of combustion.

The fuel nozzle assembly of the preceding clause, the heat shield further comprises a plurality of fourth exhaust apertures opening into the internal cooling cavity and extending through the outer wall.

The fuel nozzle assembly of any preceding clause, the fuel nozzle housing at least partially defining the cooling flow passage.

The fuel nozzle assembly of any preceding clause, further comprising a mixer assembly that comprises a pilot mixer and a main mixer.

The fuel nozzle assembly of any preceding clause, the main mixer being concentrically aligned with respect to the pilot mixer and extends circumferentially about the pilot mixer.

A turbine engine comprises a combustor that comprises an outer liner, an inner liner, an annular dome, a combustion chamber defined by the outer liner and an inner liner, and a plurality of fuel nozzle assemblies. Each fuel nozzle assembly of the plurality of fuel nozzle assemblies comprises a fuel nozzle housing, a fuel nozzle disposed within the fuel nozzle housing, and a heat shield coupled to the fuel nozzle housing. The heat shield comprises an aft wall extending at an aft end of the heat shield along a radial direction extending perpendicular to a heat shield centerline axis defined by the heat shield, a forward wall extending along the radial direction and disposed between the aft wall and a cooling flow passage partially defined by the forward wall, an outer wall extending from the forward wall to the aft wall such that an annular outer rim is defined along an outer surface of the outer wall between the forward wall and the outer wall, an inner wall extending from the forward wall to the aft wall, and an internal cooling cavity defined and enclosed by the aft wall, the forward wall, the outer wall, and the inner wall, each of the aft wall, the forward wall, the outer wall, and the inner wall being annular such that the internal cooling cavity is annular, a plurality of first exhaust apertures opening into the cooling flow passage and extending through the forward wall into the internal cooling cavity, a plurality of second exhaust apertures opening into the internal cooling cavity and extending through the aft wall, and a plurality of third exhaust apertures opening into the cooling flow passage and extending through the forward wall to the outer surface of the outer wall adjacent to the outer rim, and, during operation of the turbine engine, the plurality of first exhaust apertures and the plurality of second exhaust apertures direct flow of air from the cooling flow passage and through the internal cooling cavity to cool the heat shield from heat of combustion in the combustion chamber.

The turbine engine of the preceding clause, the heat shield further comprises a plurality of fourth exhaust apertures opening into the internal cooling cavity and extending through the outer wall.

The turbine engine of any preceding clause, the plurality of fuel nozzle assemblies further comprises a plurality of mixer assemblies, each mixer assembly of the plurality of mixer assemblies comprises a pilot mixer and a main mixer.

Although the foregoing description is directed to the preferred embodiments, it is noted that other variations and modifications will be apparent to those skilled in the art, and may be made without departing from the disclosure. Moreover, features described in connection with one embodiment may be used in conjunction with other embodiments, even if not explicitly stated above.

## Claims

1. A heat shield (210, 310, 410, 510) for a fuel nozzle of a turbine engine (10), the heat shield (210, 310, 410, 510) comprising:
an aft wall (220, 320, 420, 520) extending at an aft end (208, 308, 408, 508) of the heat shield (210, 310, 410, 510) along a radial direction that extends perpendicular to a heat shield centerline axis (211, 311, 411, 511) defined by the heat shield (210, 310, 410, 510);
a forward wall (222, 322, 422, 522) extending along the radial direction and disposed between the aft wall (220, 320, 420, 520) and a cooling flow passage (224) partially defined by the forward wall (222, 322, 422, 522);
an outer wall (230, 330, 430, 530) extending from the forward wall (222, 322, 422, 522) to the aft wall (220, 320, 420, 520) such that an annular outer rim (232) is defined along an outer surface (223, 233, 323, 333, 423, 433, 523, 533) of the outer wall (230, 330, 430, 530) between the forward wall (222, 322, 422, 522) and the outer wall (230, 330, 430, 530);
an inner wall (226, 326, 426, 526) extending from the forward wall (222, 322, 422, 522) to the aft wall (220, 320, 420, 520); and
an internal cooling cavity (234, 334, 434, 534) defined and enclosed by the aft wall (220, 320, 420, 520), the forward wall (222, 322, 422, 522), the outer wall (230, 330, 430, 530), and the inner wall (226, 326, 426, 526), each of the aft wall (220, 320, 420, 520), the forward wall (222, 322, 422, 522), the outer wall (230, 330, 430, 530), and the inner wall (226, 326, 426, 526) being annular such that the internal cooling cavity (234, 334, 434, 534) is annular,
wherein a plurality of first exhaust apertures (236, 336, 436, 536) opens into the cooling flow passage (224) and extends through the forward wall (222, 322, 422, 522) into the internal cooling cavity (234, 334, 434, 534), a plurality of second exhaust apertures (238, 338, 438, 538) opens into the internal cooling cavity (234, 334, 434, 534) and extends through the aft wall (220, 320, 420, 520), and a plurality of third exhaust apertures (240, 340, 440, 540) opens into the cooling flow passage (224) and extends through the forward wall (222, 322, 422, 522) to the outer surface (223, 233, 323, 333, 423, 433, 523, 533) of the outer wall (230, 330, 430, 530) adjacent to the outer rim (232), and
wherein, during operation of the turbine engine (10), the plurality of first exhaust apertures (236, 336, 436, 536) and the plurality of second exhaust apertures (238, 338, 438, 538) direct flow of air from the cooling flow passage (224) and through the internal cooling cavity (234, 334, 434, 534) to cool the heat shield (210, 310, 410, 510) from heat of combustion.

2. The heat shield (210, 310, 410, 510) of claim 1, wherein a plurality of fourth exhaust apertures (242, 342, 442, 542) opens into the internal cooling cavity (234, 334, 434, 534) and extends through the outer wall (230, 330, 430, 530).

3. The heat shield (210, 310, 410, 510) of claim 1 or claim 2, wherein the outer wall (230, 330, 430, 530) is conical shaped and slopes radially inward from the forward wall (222, 322, 422, 522) to the aft wall (220, 320, 420, 520) relative to the heat shield centerline axis (211, 311, 411, 511), and a cross-sectional profile of the aft wall (220, 320, 420, 520) in the radial direction has a concave shape or a convex shape.

4. The heat shield (210, 310, 410, 510) of claim 1 or claim 2, wherein the forward wall (222, 322, 422, 522) extends parallel to the aft wall (220, 320, 420, 520), and the outer wall (230, 330, 430, 530) extends from the forward wall (222, 322, 422, 522) to the aft wall (220, 320, 420, 520) at an angle that is nonparallel to the heat shield centerline axis (211, 311, 411, 511).

5. The heat shield (210, 310, 410, 510) of claim 4, wherein the outer wall (230, 330, 430, 530) slopes radially outward from the forward wall (222, 322, 422, 522) to the aft wall (220, 320, 420, 520) relative to the heat shield centerline axis (211, 311, 411, 511) or slopes radially inward from the forward wall (222, 322, 422, 522) to the aft wall (220, 320, 420, 520) relative to the heat shield centerline axis (211, 311, 411, 511).

6. The heat shield (210, 310, 410, 510) of any preceding claim, wherein the plurality of first exhaust apertures (236, 336, 436, 536) is arranged along the forward wall (222, 322, 422, 522) in at least a first row (236a, 238a) disposed radially toward the inner wall (226, 326, 426, 526) and a second row (236b, 238b) disposed radially toward the outer wall (230, 330, 430, 530).

7. The heat shield (210, 310, 410, 510) of claim 6, wherein each aperture of the plurality of first exhaust apertures (236, 336, 436, 536) arranged in the first row (236a, 238a) extends through the forward wall (222, 322, 422, 522) at a first angle relative to the heat shield centerline axis (211, 311, 411, 511), and
wherein each aperture of the plurality of first exhaust apertures (236, 336, 436, 536) arranged in the second row (236b, 238b) extends through the forward wall (222, 322, 422, 522) at a second angle relative to the heat shield centerline axis (211, 311, 411, 511) that is different than the first angle.

8. The heat shield (210, 310, 410, 510) of claim 6 or claim 7, wherein the plurality of first exhaust apertures (236, 336, 436, 536) is further arranged along the forward wall (222, 322, 422, 522) in a third row (236c, 238c) disposed radially between the first row (236a, 238a) and the second row (236b, 238b).

9. The heat shield (210, 310, 410, 510) of claim 8, wherein each aperture of the plurality of first exhaust apertures (236, 336, 436, 536) arranged in the first row (236a, 238a) extends through the forward wall (222, 322, 422, 522) at a first angle relative to the heat shield centerline axis (211, 311, 411, 511), each aperture of the plurality of first exhaust apertures (236, 336, 436, 536) arranged in the second row (236b, 238b) extends through the forward wall (222, 322, 422, 522) at a second angle relative to the heat shield centerline axis (211, 311, 411, 511) that is different than the first angle, and each aperture of the plurality of first exhaust apertures (236, 336, 436, 536) arranged in the third row (236c, 238c) extends through the forward wall (222, 322, 422, 522) at a third angle relative to the heat shield centerline axis (211, 311, 411, 511) that is different than the first angle and the second angle.

10. The heat shield (210, 310, 410, 510) of any preceding claim, wherein the plurality of second exhaust apertures (238, 338, 438, 538) is arranged along the aft wall (220, 320, 420, 520) in at least a first row (236a, 238a), a second row (236b, 238b), and a third row (236c, 238c) that extend in a circumferential direction about the heat shield centerline axis (211, 311, 411, 511), the first row (236a, 238a) being disposed radially toward the inner wall (226, 326, 426, 526), the second row (236b, 238b) being disposed radially toward the outer wall (230, 330, 430, 530), and the third row (236c, 238c) being disposed radially between the first row (236a, 238a) and the second row (236b, 238b).

11. The heat shield (210, 310, 410, 510) of claim 10, wherein the plurality of second exhaust apertures (238, 338, 438, 538) is further arranged along the forward wall (222, 322, 422, 522) in a fourth row (238d) and a fifth row (238e) that extend in the circumferential direction, the fourth row (238d) being disposed radially between the second row (236b, 238b) and the third row (236c, 238c), and the fifth row (238e) being disposed radially between the first row (236a, 238a) and the second row (236b, 238b).

12. The heat shield (210, 310, 410, 510) of claim 11, wherein each aperture of the plurality of second exhaust apertures (238, 338, 438, 538) arranged in the first row (236a, 238a) is radially aligned, in the radial direction, with circumferentially adjacent apertures of the plurality of second exhaust apertures (238, 338, 438, 538) arranged in the second row (236b, 238b) and the third row (236c, 238c), and
wherein each aperture of the plurality of second exhaust apertures (238, 338, 438, 538) arranged in the third row (236c, 238c) and the fourth row (238d) is radially offset, in the radial direction, from circumferentially adjacent apertures of the plurality of second exhaust apertures (238, 338, 438, 538) arranged in the first row (236a, 238a), the second row (236b, 238b), and the third row (236c, 238c).

13. The heat shield (210, 310, 410, 510) of claim 10, wherein each aperture of the plurality of second exhaust apertures (238, 338, 438, 538) extends through the aft wall (220, 320, 420, 520) at a compound angle relative to the heat shield centerline axis (211, 311, 411, 511), and
wherein a tangential angle of the compound angle is in a range of about five degrees to about sixty-five degrees, inclusive, and a radial angle of the compound angle is in a range of about five degrees to about sixty-five degrees, inclusive.

14. The heat shield (210, 310, 410, 510) of claim 13, wherein the compound angle of each aperture of the plurality of second exhaust apertures (238, 338, 438, 538) is the same as that of the other apertures of the plurality of second exhaust apertures (238, 338, 438, 538).

15. A fuel nozzle assembly (111) for a turbine engine (10), the fuel nozzle assembly (111) comprising:
the heat shield (210, 310, 410, 510) of any preceding claim;
a fuel nozzle housing (200) at least partially defining the cooling flow passage (224), the heat shield (210, 310, 410, 510) being coupled to the fuel nozzle housing (200); and
a fuel nozzle (204) disposed within the fuel nozzle housing (200).
